# EUROPEAN PATENT APPLICATION

(11) **EP 4 793 819 A1**
(43) Date of publication of application: **19.08.2026**
(21) Application number: 26158097.1
(22) Date of filing: 12.02.2026
(51) Int. Cl.: G06F 40/35, G06N 5/045, G10L 15/26

(54) **SYSTEMS AND METHODS FOR GENERATING PLAIN TEXT DESCRIPTIONS BY TRANSLATING PREDICTIONS BASED ON SPEECH SIGNAL OR DATA PROCESSING RESULTS FROM SIMILAR USERS**

(30) Priority: 14.02.2025 US 202519054648
(71) Applicant: Capital One Services, LLC, McLean, Virginia 22102 (US)
(72) Inventor: SHARPE, Samuel, McLean, VA 22102 (US)
(74) Representative: Boult Wade Tennant LLP

(57) **Abstract**

Systems and methods for generating plain text descriptions by translating predictions based on speech signal or data processing from similar users. The system may retrieve a first embedding set, wherein the first embedding set comprises a plurality of user embeddings, wherein each user embedding of the plurality of user embeddings, correspond to respective user query of a plurality of user queries. The system may process the plurality of user embeddings with a first classifier model to generate a first subset of user embeddings corresponding to a first prediction of a prediction pairing and a second subset of user embeddings corresponding to a second prediction of the prediction pairing. The system may determine, using the first classifier model, that a first user query corresponds to the first prediction. The system may determine a first response to the first user query based on the prediction pairing.

## Description

### BACKGROUND

Predictions from artificial intelligence (AI) models are often hard to interpret because of their inherent complexity and the way they process data. Many AI models, especially those based on deep learning, operate as "black boxes," where the relationships between inputs and outputs are represented by intricate layers of mathematical transformations that are difficult for humans to trace. These models rely on vast amounts of data and identify patterns that may not be explicitly understandable to humans, especially when they involve abstract or high-dimensional spaces. Additionally, the lack of transparency in how features interact within the model can obscure why certain predictions are made, particularly in cases of non-linear relationships or feature interactions. For decision-making in critical areas like healthcare, finance, and law, this opaqueness raises concerns about trust, accountability, and fairness. Efforts to make AI models interpretable, such as feature attribution methods, visualization tools, or inherently explainable model architectures, are advancing, but achieving a balance between interpretability and predictive performance remains an ongoing challenge.

Models that interpret audio, speech, and language inputs are particularly hard to interpret because they process highly complex, sequential, and context-dependent data. Audio and speech signals contain intricate temporal patterns and often encode subtle variations in tone, pitch, and timing, which are difficult for humans to manually analyze or map to specific model behaviors. Similarly, language models deal with the inherent ambiguity and richness of human language, including idiomatic expressions, contextual meanings, and syntactic structures. These models, particularly deep learning architectures like recurrent neural networks (RNNs), transformers, or convolutional neural networks (CNNs) for audio, learn representations in high-dimensional spaces that are far removed from human intuition. Moreover, they often rely on distributed representations where individual components of the model do not have interpretable roles. The reliance on vast training datasets adds another layer of complexity, as biases or patterns in the data may influence predictions in ways that are challenging to identify and mitigate. These factors, combined with the difficulty of visualizing and understanding the inner workings of such models, make interpreting their outputs particularly challenging.

### SUMMARY

Systems and methods are described herein for novel uses and/or improvements to artificial intelligence applications, particularly in terms of improved interpretability by translating predictions based on speech signal or data processing from similar users. For example, in existing systems, existing approaches to explaining AI predictions use intrinsic interpretability or post-hoc explainability of predictions of an AI model. Intrinsic interpretability involves designing models that are inherently understandable, such as linear regression, decision trees, or rule-based systems, where the relationships between inputs and outputs are clear and straightforward. On the other hand, post-hoc explainability is used with complex models, like neural networks, to generate explanations after the model has made predictions. This approach includes techniques like feature importance analysis, which identifies the most influential inputs for a prediction, or visualization tools, such as saliency maps, which highlight relevant regions of an image or audio signal. While post-hoc explainability may make complex models more understandable, the outputs, such as heatmaps, feature importance scores, or mathematical approximations, are still be too technical or abstract for general use. The systems and methods described herein thus overcome the problem with intrinsic interpretability by being fully compatible with complex model as well as overcome the problem with post-hoc explainability by allowing for high interoperability and general use.

To achieve this, the systems and methods generate textual descriptions of embeddings used to create predictions. The systems and methods then determine characteristics of the embeddings to map to the textual descriptions. The systems and methods then compare the textual descriptions as opposed to the embeddings themselves. As the textual descriptions are already linked to a given prediction/embedding and already in a human-readable and easily interpretable form, the systems and methods provide interpretability without conventional intrinsic interpretability or post-hoc explainability.

For example, the systems and methods that generate textual descriptions of embeddings to explain predictions operate by directly linking the abstract, high-dimensional features encoded in embeddings to human-readable descriptions. These systems map embeddings to textual descriptions by analyzing the underlying structure and relationships within the embedding space, identifying key attributes or patterns that contribute to the prediction. For example, in natural language processing (NLP), embeddings might capture semantic properties like sentiment, topic, or tone, which can then be translated into descriptive labels or phrases. Instead of comparing embeddings directly, the system relies on comparing the textual descriptions to explain the prediction, bypassing traditional intrinsic interpretability or post-hoc explainability.

This system enhances interpretability because the textual descriptions are already in a form that humans can easily understand and analyze, eliminating the need for complex and potentially unreliable explanation techniques. By linking these descriptions to specific predictions, the system allows users to intuitively understand the reasoning behind a decision without delving into the intricacies of the model's internal computations. Furthermore, this approach reduces ambiguity and fosters trust by providing consistent, standardized explanations tied directly to the embedding's characteristics. This paradigm represents a shift toward integrating interpretability as a fundamental aspect of AI systems, rather than an afterthought, enabling more transparent and accessible machine learning workflows.

Moreover, the system may use prediction pairings to interpret a prediction operates by leveraging the relationship between a target prediction and its opposite prediction, both of which have corresponding textual descriptions. The system may thus rely on comparing the textual descriptions of the paired predictions rather than the numerical embeddings or model outputs. For example, in a sentiment analysis task, a target prediction like "positive sentiment" might be paired with its opposite, "negative sentiment," each described by associated characteristics such as "happy, satisfied" versus "angry, dissatisfied." When interpreting a new prediction, the system evaluates the similarity or contrast between the textual descriptions associated with the prediction and those of the paired opposites.

By comparing these textual descriptions, the system identifies key differences or overlaps in the descriptive attributes, providing insights into the factors driving the prediction. This approach inherently frames interpretability in human-readable terms, making it easier for users to understand the rationale behind the decision. For instance, if a model predicts "positive sentiment" and the description emphasizes "joyful and optimistic language," the contrast with the opposite description, "critical and frustrated tone," clarifies why the model leaned toward the positive outcome. This comparison method not only simplifies interpretation but also reduces reliance on opaque mathematical representations, offering a straightforward and intuitive explanation framework that is particularly useful for non-technical users.

In some aspects, systems and methods for generating plain text descriptions by translating predictions based on speech signal or data processing from similar users are describes. For example, the system may receive a first user query from a first user. The system may retrieve a first embedding set, wherein the first embedding set comprises a plurality of user embeddings, wherein each user embedding of the plurality of user embeddings, correspond to respective user query of a plurality of user queries. The system may process the plurality of user embeddings with a first classifier model to generate a first subset of user embeddings corresponding to a first prediction of a prediction pairing and a second subset of user embeddings corresponding to a second prediction of the prediction pairing. The system may determine, using the first classifier model, that the first user query corresponds to the first prediction. The system may determine a first response to the first user query based on the prediction pairing.

Various other aspects, features, and advantages of the invention will be apparent through the detailed description of the invention and the drawings attached hereto. It is also to be understood that both the foregoing general description and the following detailed description are examples and are not restrictive of the scope of the invention. As used in the specification and in the claims, the singular forms of "a," "an," and "the" include plural referents unless the context clearly dictates otherwise. In addition, as used in the specification and the claims, the term "or" means "and/or" unless the context clearly dictates otherwise. Additionally, as used in the specification, "a portion" refers to a part of, or the entirety of (i.e., the entire portion), a given item (e.g., data) unless the context clearly dictates otherwise.

### BRIEF DESCRIPTION OF THE DRAWINGS

FIG. 1 shows an illustrative diagram for translating predictions based on speech signal or data processing from similar users, in accordance with one or more embodiments.
FIG. 2 shows an illustrative diagram for generating prediction pairings, in accordance with one or more embodiments.
FIG. 3 shows illustrative components for a system used to facilitate plain text descriptions of model predictions, in accordance with one or more embodiments.
FIG. 4 shows a flowchart of the steps involved in generating plain text descriptions by translating predictions based on speech signal or data processing from similar users, in accordance with one or more embodiments.

### DETAILED DESCRIPTION OF THE DRAWINGS

In the following description, for the purposes of explanation, numerous specific details are set forth in order to provide a thorough understanding of the embodiments of the invention. It will be appreciated, however, by those having skill in the art that the embodiments of the invention may be practiced without these specific details or with an equivalent arrangement. In other cases, well-known structures and devices are shown in block diagram form in order to avoid unnecessarily obscuring the embodiments of the invention.

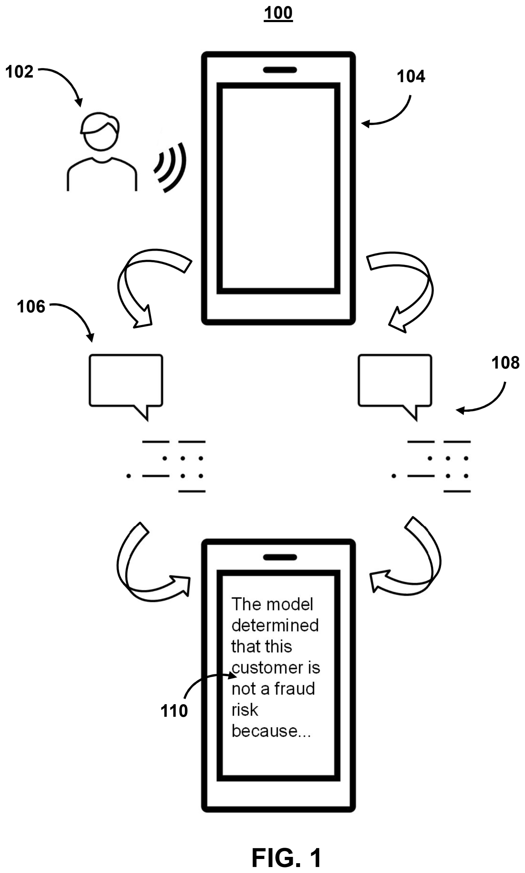

FIG. 1 shows an illustrative diagram for translating predictions based on speech signal or data processing from similar users, in accordance with one or more embodiments. For example, FIG. 1 shows system 100, which may be a system used to generate plain text descriptions by translating predictions based on speech signal or data processing from similar users using prediction pairings. As shown in system 100, user 102 may generate a user query that is received by device 104.

System 100 may receive a user query through an input interface designed to capture and process the user's request. This interface can vary depending on the type of system and interaction mode, such as a search bar, a chatbot, a voice recognition system, or an API endpoint. Once the user submits the query, the system processes the input, often converting it into a standardized format for analysis. For example, a text-based query might be tokenized or parsed to identify key terms, while a voice query may undergo speech-to-text conversion. The system then interprets the query's intent by leveraging natural language processing (NLP) techniques, pattern matching, or predefined rules, depending on its complexity. Contextual information, such as prior interactions or user preferences, may also be integrated to enhance the system's understanding of the query. Once processed, the system routes the query to the appropriate components-such as a database, knowledge graph, or machine learning model-to generate a response. This process ensures the system can effectively interpret and address the user's request in a timely and relevant manner.

For example, device 104 may receive an audio query from a first user. Device 104 may receive an audio query by converting textual or symbolic data into a speech or sound format that can be used to interact with audio-based systems or convey information to users. This process typically begins with the system formulating the content of the query, often derived from a user's request, predefined rules, or a need to elicit specific information. Once the content is established, the system employs text-to-speech (TTS) technology or pre-recorded audio files to synthesize the audio output. In a TTS system, the text is processed linguistically to determine pronunciation, intonation, and rhythm, which are then converted into waveforms using a speech synthesis engine. Depending on the use case, the system may include customization options, such as adjusting the voice tone, speed, or accent to suit user preferences or contextual requirements. The resulting audio query can be played through speakers, sent over a communication channel, or integrated into a multi-modal interaction framework. This approach allows the system to engage with users or other systems that rely on auditory communication, ensuring seamless interaction in environments where audio output is preferred or necessary.

In some embodiments, system 100 may use additional information received with a query, such as clickstream data, user activity data, or user profile data, to refine its understanding of the user's intent by providing context to the query. Clickstream data, which tracks the user's interactions on a platform (e.g., the pages visited, links clicked, or time spent on specific content), helps the system identify patterns or preferences that indicate what the user is looking for. For example, if a user has been exploring product reviews, their intent might be to gather information before making a purchase. User activity data, such as recent searches, app interactions, or device usage, offers temporal context, enabling the system to determine whether the query is part of an ongoing task or a new inquiry. System 100 may use any data determined based on a user interacting with a user interface.

As referred to herein, a "user interface" may comprise a human-computer interaction and communication in a device, and may include display screens, keyboards, a mouse, and the appearance of a desktop. For example, a user interface may comprise a way a user interacts with an application or a website.

As referred to herein, "content" should be understood to mean an electronically consumable user asset, such as Internet content (e.g., streaming content, downloadable content, Webcasts, etc.), video clips, audio, content information, pictures, rotating images, documents, playlists, websites, articles, books, electronic books, blogs, advertisements, chat sessions, social media content, applications, games, and/or any other media or multimedia and/or combination of the same. Content may be recorded, played, displayed, or accessed by user devices, but can also be part of a live performance. Furthermore, user generated content may include content created and/or consumed by a user. For example, user generated content may include content created by another, but consumed and/or published by the user.

The system may monitor content generated by the user to generate user profile data. As referred to herein, "a user profile" and/or "user profile data" may comprise data actively and/or passively collected about a user. For example, the user profile data may comprise content generated by the user and a user characteristic for the user. A user profile may be content consumed and/or created by a user.

User profile data may also include a user characteristic. As referred to herein, "a user characteristic" may include information about a user and/or information included in a directory of stored user settings, preferences, and information for the user. For example, a user profile may have the settings for the user's installed programs and operating system. In some embodiments, the user profile may be a visual display of personal data associated with a specific user, or a customized desktop environment. In some embodiments, the user profile may be digital representation of a person's identity. The data in the user profile may be generated based on the system actively or passively monitoring.

User profile data, which may include demographics, preferences, location, or past behaviors, provides personalized context, allowing the system to tailor its response based on the user's known interests or needs. For instance, if a query like "restaurants near me" is paired with location data and a preference for vegan cuisine in the user profile, the system can infer that the user is searching for nearby vegan dining options. By combining these data sources, the system applies machine learning or rule-based algorithms to analyze correlations, patterns, and probabilities, ultimately determining the most likely intent behind the query. This contextual approach enhances the relevance and accuracy of responses, creating a more personalized and seamless user experience.

In some embodiments, the system may retrieve a sequential foundation model, wherein the sequential foundation model is trained to map embeddings of audio queries to corresponding descriptions, and wherein the descriptions comprise human-readable text. For example, a sequential foundation model may be trained to map embeddings of audio queries to corresponding descriptions, which is a type of machine learning model designed to process and interpret audio data in a structured, sequential manner. This model is trained on large datasets of audio samples and their corresponding human-readable text descriptions, enabling it to learn complex relationships between the features of audio signals and their semantic meanings. The sequential nature of the model, often based on architectures like transformers, recurrent neural networks (RNNs), or their variants, allows it to effectively handle the temporal characteristics of audio data, such as variations in pitch, tone, and timing, which are crucial for understanding speech, sounds, or other auditory inputs.

During training, the model learns to generate embeddings-compact, high-dimensional representations of audio queries-that capture key characteristics of the input audio. These embeddings are then mapped to textual descriptions, such as "a person saying 'hello' in a cheerful tone" or "ambient sound of a busy street." The descriptions provide a human-readable interpretation of the audio, bridging the gap between raw auditory signals and their semantic context. By focusing on this mapping, the model enables interpretability and usability, making it possible to extract meaningful insights or generate descriptions of audio queries in a way that aligns with human understanding. This capability is particularly valuable in applications like voice assistants, audio content analysis, and accessibility tools, where translating audio into descriptive text is essential for interaction and comprehension.

System 100 may generate a plurality of user embeddings based on a plurality of audio queries. For example, system 100 generates a plurality of user embeddings based on a plurality of audio queries by processing each query through a series of steps that extract meaningful features and encode them into compact, high-dimensional vectors. The system begins by receiving audio queries from users, which are then preprocessed to normalize the data, remove noise, and segment relevant portions of the audio. This preprocessing ensures that the input is clean and ready for feature extraction. The system then uses a neural network, often a sequential foundation model such as a transformer or a convolutional neural network (CNN) designed for audio, to analyze the temporal and spectral features of the audio. These features might include pitch, tone, phonetic content, and rhythm, which are critical for understanding the characteristics and context of the audio queries.

The neural network maps these features to embeddings-numerical representations that capture the semantic and contextual information inherent in each audio query. Each embedding serves as a unique representation of an audio query, enabling the system to encode complex auditory patterns in a format that is computationally efficient and meaningful for downstream tasks. A plurality of embeddings is generated by processing multiple audio queries in parallel or sequentially, with each query resulting in its own embedding. These embeddings are stored and organized for further use, such as clustering similar queries, generating textual descriptions, or matching user intent to system actions. By leveraging these embeddings, system 100 creates a robust, scalable framework for interpreting and managing audio queries in diverse applications.

As shown in FIG. 1, system 100 retrieves a first embedding set, wherein the first embedding set comprises a plurality of user embeddings, wherein each user embedding of the plurality of user embeddings, correspond to respective user query of a plurality of user queries. For example, system 100 may retrieve a first embedding set, which comprises a plurality of user embeddings, by accessing a storage mechanism or database where the embeddings are organized and stored in association with their corresponding user queries. Each user query, part of a plurality of queries received from users, is processed by the system to generate its respective user embedding during an earlier stage. These embeddings, which are compact, high-dimensional representations of the queries, are indexed or tagged with metadata that links them to the original queries, user identifiers, timestamps, or other contextual information.

When retrieving the first embedding set, the system identifies the relevant embeddings based on specified criteria, such as a request to analyze recent queries, queries related to a specific user, or queries matching a particular category or intent. The system queries the storage mechanism using these criteria, which may involve searching through indexed entries or applying filters to narrow down the results. Once the retrieval process is complete, the system compiles the matching embeddings into the first embedding set, ensuring that the association between each embedding and its corresponding user query is preserved. This set is then ready for further processing, such as clustering, similarity analysis, or generating textual descriptions, to derive actionable insights or support downstream tasks.

System may determine a prediction pairing (e.g., prediction 106 and prediction 108) based on the audio query from the first user (e.g., user 102). For example, the prediction pairing may comprise a pair of opposite predictions (e.g., embeddings corresponding to different categories of predictions). For example, the system determines a prediction pairing, such as predictions 106 and 108, based on the audio query from the first user (e.g., user 102) by analyzing the embedding of the audio query and matching it to a set of predefined or learned categories of predictions. Initially, the system processes the user's audio query to generate a user embedding, which is a numerical representation capturing the semantic and contextual information of the query. This embedding is then compared to a model's learned prediction space or database of labeled embeddings corresponding to various prediction categories.

The system identifies a primary prediction (e.g., prediction 106) by finding the category or prediction that best aligns with the user embedding, often using similarity measures like cosine similarity, Euclidean distance, or probabilistic scoring. Once the primary prediction is determined, the system identifies its opposite (e.g., prediction 108), which may be defined as the prediction category that is semantically or contextually most divergent from the primary prediction. For instance, in a sentiment analysis scenario, if prediction 106 corresponds to "positive sentiment," the system identifies prediction 108 as "negative sentiment," leveraging pre-defined oppositional relationships between categories or using a trained model to determine such relationships dynamically. The prediction pairing is then established by grouping the primary prediction and its opposite, forming a pair that provides a contrasting context for interpretability or further analysis. This pairing allows the system to assess the user's intent or ambiguity in the query by comparing the proximity or divergence of the user embedding to both predictions, aiding in refining the final response or explanation.

The system may process the plurality of user embeddings with a first classifier model to generate a first subset of user embeddings corresponding to a first prediction of the prediction pairing. Additionally, the system may process the plurality of user embeddings with the first classifier model to generate a second subset of user embeddings corresponding to a second prediction of the prediction pairing.

System 100 processes the plurality of user embeddings with a first classifier model to generate a first subset of user embeddings corresponding to a first prediction of the prediction pairing by leveraging the classification capabilities of the model to categorize each embedding. The process begins with inputting the plurality of user embeddings into the first classifier model, which has been trained to associate specific embedding patterns with predefined prediction categories, including the first prediction of the pairing. The classifier evaluates each embedding based on learned features and decision boundaries that differentiate between various prediction categories.

For each user embedding, the classifier assigns a likelihood or confidence score for each possible prediction, indicating how closely the embedding aligns with the characteristics of each category. The system then identifies embeddings with scores that meet or exceed a threshold for the first prediction, effectively filtering the embeddings to create a subset that corresponds to the first prediction. This threshold ensures that only embeddings strongly associated with the first prediction are included, reducing noise and ambiguity.

The resulting first subset of user embeddings represents the audio queries most aligned with the first prediction in the pairing. These embeddings are grouped together and prepared for subsequent processing, such as comparison to the opposite prediction or generation of textual explanations. By utilizing the first classifier model, System 100 efficiently narrows down the embeddings to those relevant to the specific prediction, supporting focused and accurate analysis.

The system may process the first subset of user embeddings to generate a first description, wherein the first description describes a first prediction corresponding to the first prediction the human-readable text. The system may process the second subset of user embeddings to generate a second description, wherein the second description describes a second prediction corresponding to the second prediction the human-readable text.

System 100 may then generate response 110, which may include a description explaining the prediction. The system may determine a third description distinguishing the first description and the second description.

For example, system 100 processes the first subset of user embeddings to generate a first description by leveraging a mapping mechanism that translates the numerical features of the embeddings into human-readable text associated with the first prediction. This process begins with the system analyzing the embeddings in the first subset to identify key characteristics and patterns that are most representative of the first prediction. These characteristics are derived from the semantic or contextual features captured in the embeddings, such as tone, intent, or content, depending on the application.

The system uses a pretrained model or a set of rules designed to map these features to textual descriptions. For example, in a sentiment analysis context, the system might map embeddings characterized by positive tones and language patterns to a description like "queries expressing satisfaction and approval." This mapping may be facilitated by a model trained on labeled data, where embeddings corresponding to specific predictions are associated with descriptive phrases. Alternatively, the system may employ a knowledge base or template matching to generate the text.

Once the mapping is complete, the system synthesizes the descriptive elements into a cohesive and interpretable first description. This description succinctly explains the essence of the first prediction in human-readable terms, making it accessible to users. By processing the first subset of user embeddings in this way, the system ensures that the generated description accurately reflects the characteristics and intent of the data associated with the first prediction, enabling clear and effective communication of the prediction's meaning.

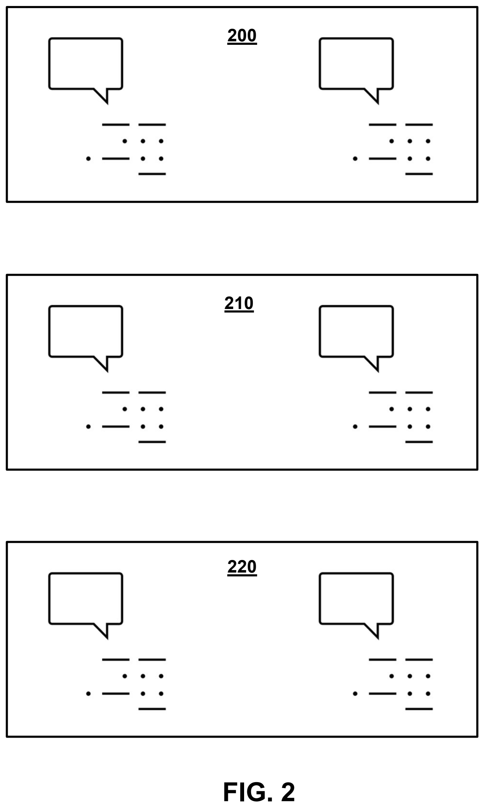

FIG. 2 shows an illustrative diagram for generating prediction pairings, in accordance with one or more embodiments. The system may cluster embeddings into prediction pairings, assigns embeddings to the predictions in the pairings, and categorizes the predictions by leveraging a combination of machine learning techniques and predefined rules. The process begins with the system analyzing the embeddings, which are high-dimensional representations of user queries, to identify patterns and relationships. Clustering algorithms such as k-means, hierarchical clustering, or density-based clustering are applied to group embeddings based on their similarity in the embedding space. These clusters correspond to groups of embeddings that share semantic or contextual similarities, potentially aligning with specific predictions.

To assign embeddings to predictions within the pairings, the system maps each cluster to its most likely prediction category. This is achieved by comparing the embeddings in each cluster to a set of labeled training examples or reference embeddings associated with known predictions. Metrics such as cosine similarity or Euclidean distance are used to measure alignment between the cluster centroid (or representative point) and the reference embeddings for each prediction. Once the closest match is identified, the system assigns all embeddings in the cluster to the corresponding prediction.

Categorizing the predictions within the pairings involves analyzing the relationships between different predictions. The system determines whether predictions are oppositional, complementary, or contextually linked based on their semantic properties, embedding distributions, or predefined domain knowledge. For example, oppositional predictions may be identified by observing embeddings that are distributed in opposite directions in the embedding space, while complementary predictions may exhibit overlapping or adjacent regions. The system uses these insights to define meaningful pairings, ensuring that each prediction in a pairing is distinct yet contextually relevant to the other.

By clustering embeddings, assigning them to predictions, and categorizing these predictions into pairings, the system creates a structured and interpretable framework for analyzing and utilizing embeddings in predictive tasks. This approach enhances the system's ability to generate insightful descriptions, refine user intent analysis, and provide meaningful explanations for predictions.

Each of the prediction pairings (e.g., prediction pairing 200, prediction pairing 210, and prediction pairing 220) may include a first prediction and a second prediction. Each of these predictions may correspond to a respective textual description. For example, a system generates each of the prediction pairings, such as prediction pairing 200, prediction pairing 210, and prediction pairing 220, by analyzing the relationships between possible predictions and organizing them into meaningful pairs. Each pairing includes a first prediction and a second prediction, often chosen based on their semantic, contextual, or functional relationship. The system begins by defining the scope of predictions available, typically derived from model outputs or predefined categories learned during training. These predictions are represented as embeddings or directly associated with textual descriptions, which provide human-readable explanations for each category.

To generate a pairing, the system evaluates how predictions relate to each other, using criteria such as oppositionality, complementarity, or thematic similarity. For instance, in a sentiment analysis task, the system might pair "positive sentiment" with "negative sentiment" because they are opposites, while in a customer support scenario, it might pair "billing inquiry" with "technical support inquiry" due to their relevance to customer service themes. This analysis can involve statistical measures, such as the distance or direction in the embedding space, or domain-specific rules that define relationships between categories.

Once the relationships are identified, the system assigns each prediction in a pairing its corresponding textual description. These descriptions are either predefined or generated dynamically based on the semantic features of the predictions. By combining the embeddings and their descriptions, the system creates a cohesive and interpretable pairing that captures the relationship between the predictions. The process is repeated to generate multiple pairings, ensuring each pairing is distinct and contextually meaningful. These prediction pairings, complete with their respective textual descriptions, enable the system to provide structured explanations, refine analysis, and support downstream tasks, such as decision-making, user intent interpretation, or comparative evaluation of predictions.

In some embodiments, the system may determine a first prediction characteristic corresponding to the first prediction, determine a second prediction characteristic corresponding to the second prediction, determine a difference between the first prediction characteristic and the second prediction characteristic, and determine that the first prediction and the second prediction correspond to prediction pairing based on the difference. For example, the system determines that the first prediction and the second prediction correspond to a prediction pairing by analyzing their respective characteristics and identifying a meaningful difference that establishes their relationship. The process begins with the system determining a first prediction characteristic, which represents the key semantic, contextual, or feature-based attributes associated with the first prediction. This characteristic may be derived from analyzing the embeddings, patterns, or historical data linked to the first prediction. Similarly, the system determines a second prediction characteristic by identifying the attributes that define the second prediction, using the same analytical methods.

Next, the system compares the first and second prediction characteristics to identify a difference or contrast between them. This difference might be based on semantic polarity (e.g., "positive sentiment" versus "negative sentiment"), contextual divergence (e.g., "technical support" versus "billing inquiry"), or statistical distribution in an embedding space. The comparison can involve analyzing feature vectors, keywords, or clustering properties to highlight oppositional or complementary traits. Based on the identified difference, the system determines that the first and second predictions correspond to a prediction pairing. This pairing is defined by the relationship established through the contrasting characteristics, such as oppositionality, complementarity, or thematic relevance. By associating the predictions in this structured way, the system creates a framework for interpreting and comparing predictions, which can be leveraged for tasks like generating textual descriptions, refining user intent analysis, or enhancing decision-making workflows. This approach ensures that prediction pairings are meaningful and contextually grounded, supporting accurate and interpretable system behavior.

In some embodiments, the system may determine a first category corresponding to the first prediction, determine a second category corresponding to the second prediction, and determine that the first prediction and the second prediction correspond to prediction pairing based on comparing the first category and the second category. A system determines that the first prediction and the second prediction correspond to a prediction pairing by analyzing and comparing their associated categories. The process begins with the system determining a first category that corresponds to the first prediction. This category encapsulates the semantic, functional, or contextual attributes that define the first prediction, such as its topic, sentiment, or intent. Similarly, the system identifies a second category corresponding to the second prediction, characterizing it in the same manner. These categories are typically derived from a predefined taxonomy or learned from training data during the system's development.

The system then compares the first and second categories to assess their relationship. This comparison involves analyzing similarities, differences, or oppositional traits between the categories. For instance, the system might recognize that "positive sentiment" (first category) and "negative sentiment" (second category) are opposites, or that "technical support queries" and "billing inquiries" are distinct but complementary service types. The comparison may be conducted using natural language processing (NLP) techniques, semantic analysis, or rule-based frameworks to determine whether the categories share a meaningful relationship.

Based on the comparison, the system determines that the first and second predictions form a prediction pairing if the relationship between their categories aligns with predefined pairing criteria, such as oppositionality, complementarity, or thematic relevance. This pairing framework allows the system to organize predictions in a structured and interpretable way, enabling downstream applications like generating comparative explanations, refining classification tasks, or enhancing user interaction with the system. This approach ensures that the pairing is both meaningful and contextually relevant to the predictions involved.

For example, the system may process the first subset of user embeddings to generate the first description by determining a category for the first subset and determining that the first description corresponds to the category. For example, the system may process the first subset of user embeddings to generate the first description by analyzing the embeddings to identify a representative category and mapping this category to a corresponding human-readable description. The process begins with the system evaluating the embeddings in the first subset, which have been classified as corresponding to the first prediction. It identifies common patterns, features, or statistical characteristics shared across the embeddings, such as clustering tendencies, semantic themes, or contextual similarities. Based on these observations, the system determines a category that encapsulates the essence of the subset, such as "positive sentiment," "technical support queries," or "product inquiries."

This category is derived by matching the embeddings' attributes with predefined categories established during the system's training or through domain-specific knowledge. For instance, if the embeddings in the first subset consistently align with features indicating satisfaction or approval, the system categorizes them as "positive sentiment." Once the category is determined, the system generates the first description by associating it with the category's corresponding human-readable text. This text is either predefined or dynamically generated to succinctly explain the category in a way that is interpretable to users. For example, the category "positive sentiment" may correspond to a description like "queries expressing satisfaction or approval." By ensuring that the first description accurately reflects the category, the system provides a clear and interpretable explanation of the characteristics of the first subset, enhancing its utility for downstream tasks such as prediction analysis or user feedback.

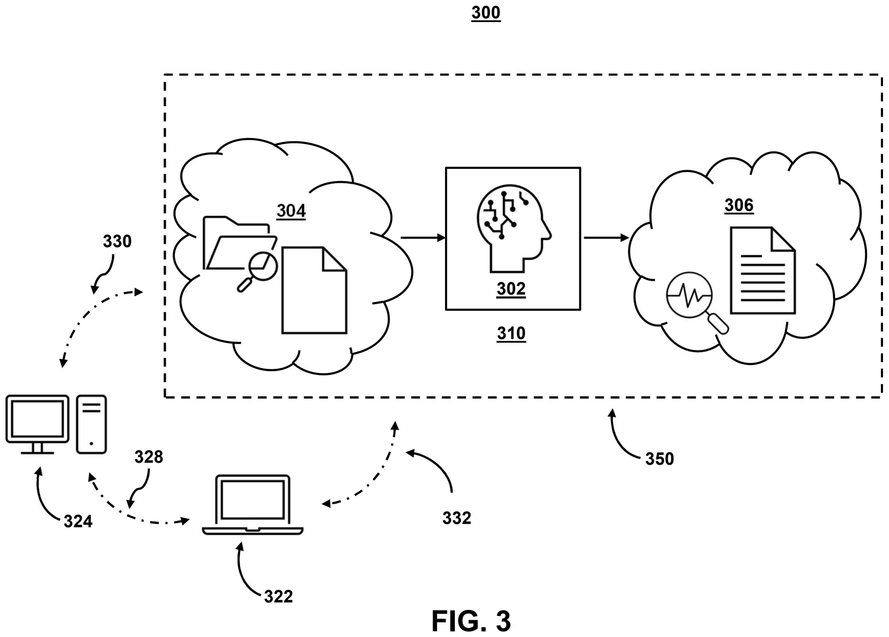

FIG. 3 shows illustrative components for a system used to facilitate plain text descriptions of model predictions, in accordance with one or more embodiments. For example, FIG. 3 may show illustrative components for generating plain text descriptions by translating predictions based on speech signal or data processing from similar users using prediction pairings. As shown in FIG. 3, system 300 may include mobile device 322 and user terminal 324. While shown as a smartphone and personal computer, respectively, in FIG. 3, it should be noted that mobile device 322 and user terminal 324 may be any computing device, including, but not limited to, a laptop computer, a tablet computer, a hand-held computer, and other computer equipment (e.g., a server), including "smart," wireless, wearable, and/or mobile devices. FIG. 3 also includes cloud components 310. Cloud components 310 may alternatively be any computing device as described above, and may include any type of mobile terminal, fixed terminal, or other device. For example, cloud components 310 may be implemented as a cloud computing system, and may feature one or more component devices. It should also be noted that system 300 is not limited to three devices. Users may, for instance, utilize one or more devices to interact with one another, one or more servers, or other components of system 300. It should be noted, that, while one or more operations are described herein as being performed by particular components of system 300, these operations may, in some embodiments, be performed by other components of system 300. As an example, while one or more operations are described herein as being performed by components of mobile device 322, these operations may, in some embodiments, be performed by components of cloud components 310. In some embodiments, the various computers and systems described herein may include one or more computing devices that are programmed to perform the described functions. Additionally, or alternatively, multiple users may interact with system 300 and/or one or more components of system 300. For example, in one embodiment, a first user and a second user may interact with system 300 using two different components.

With respect to the components of mobile device 322, user terminal 324, and cloud components 310, each of these devices may receive content and data via input/output (hereinafter "I/O") paths. Each of these devices may also include processors and/or control circuitry to send and receive commands, requests, and other suitable data using the I/O paths. The control circuitry may comprise any suitable processing, storage, and/or input/output circuitry. Each of these devices may also include a user input interface and/or user output interface (e.g., a display) for use in receiving and displaying data. For example, as shown in FIG. 3, both mobile device 322 and user terminal 324 include a display upon which to display data (e.g., conversational response, queries, and/or notifications).

Additionally, as mobile device 322 and user terminal 324 are shown as touchscreen smartphones, these displays also act as user input interfaces. It should be noted that in some embodiments, the devices may have neither user input interfaces nor displays, and may instead receive and display content using another device (e.g., a dedicated display device such as a computer screen, and/or a dedicated input device such as a remote control, mouse, voice input, etc.). Additionally, the devices in system 300 may run an application (or another suitable program). The application may cause the processors and/or control circuitry to perform operations related to generating dynamic conversational replies, queries, and/or notifications.

Each of these devices may also include electronic storages. The electronic storages may include non-transitory storage media that electronically stores information. The electronic storage media of the electronic storages may include one or both of (i) system storage that is provided integrally (e.g., substantially non-removable) with servers or client devices, or (ii) removable storage that is removably connectable to the servers or client devices via, for example, a port (e.g., a USB port, a firewire port, etc.) or a drive (e.g., a disk drive, etc.). The electronic storages may include one or more of optically readable storage media (e.g., optical disks, etc.), magnetically readable storage media (e.g., magnetic tape, magnetic hard drive, floppy drive, etc.), electrical charge-based storage media (e.g., EEPROM, RAM, etc.), solid-state storage media (e.g., flash drive, etc.), and/or other electronically readable storage media. The electronic storages may include one or more virtual storage resources (e.g., cloud storage, a virtual private network, and/or other virtual storage resources). The electronic storages may store software algorithms, information determined by the processors, information obtained from servers, information obtained from client devices, or other information that enables the functionality as described herein.

In some embodiments, system 300 and/or one or more models herein may be implemented using an application specific integrated circuit. An integrated circuit may be a small electronic device made of semiconductor material, typically silicon, that contains a large number of microscopic electronic components such as transistors, resistors, capacitors, and diodes. These components are interconnected to perform a specific function or set of functions. Integrated circuits can be classified into various types based on their functionality, such as analog, digital, and mixed-signal ICs. The transistors within an IC are the primary building blocks, as they act as switches or amplifiers for electronic signals. The other components, like resistors and capacitors, are used for controlling voltage, current, and timing within the circuit. System 300 may design the integrated circuit to be application specific such that design of the circuit is customized for a given application. In some embodiments, system 300 may use an integrated circuit system where one or more integrated circuit are spread throughout a system, network, and/or one or more devices. In such case, the system design may ensure that the circuits are integrated with other electronic components like connectors, power supplies, and sensors to form a complete and functional electronic system. This integration allows for the implementation of sophisticated tasks in devices needed for one or more specified applications.

FIG. 3 also includes communication paths 328, 330, and 332. Communication paths 328, 330, and 332 may include the Internet, a mobile phone network, a mobile voice or data network (e.g., a 5G or LTE network), a cable network, a public switched telephone network, or other types of communications networks or combinations of communications networks. Communication paths 328, 330, and 332 may separately or together include one or more communications paths, such as a satellite path, a fiber-optic path, a cable path, a path that supports Internet communications (e.g., IPTV), free-space connections (e.g., for broadcast or other wireless signals), or any other suitable wired or wireless communications path or combination of such paths. The computing devices may include additional communication paths linking a plurality of hardware, software, and/or firmware components operating together. For example, the computing devices may be implemented by a cloud of computing platforms operating together as the computing devices.

Cloud components 310 may include model 302, which may be a machine learning model, artificial intelligence model, etc. (which may be referred collectively as "models" herein). In recent years, the use of artificial intelligence, including, but not limited to, machine learning, deep learning, etc. (referred to collectively herein as artificial intelligence models, machine learning models, or simply models) has exponentially increased. Broadly described, artificial intelligence refers to a wide-ranging branch of computer science concerned with building smart machines capable of performing tasks that typically require human intelligence. Key benefits of artificial intelligence are its ability to process data, find underlying patterns, and/or perform real-time determinations. However, despite these benefits and despite the wide-ranging number of potential applications, practical implementations of artificial intelligence have been hindered by several technical problems. First, artificial intelligence may rely on large amounts of high-quality data. The process for obtaining this data and ensuring it is high-quality can be complex and time-consuming. Additionally, data that is obtained may need to be categorized and labeled accurately, which can be difficult, time-consuming and a manual task. Second, despite the mainstream popularity of artificial intelligence, practical implementations of artificial intelligence may require specialized knowledge to design, program, and integrate artificial intelligence-based solutions, which can limit the amount of people and resources available to create these practical implementations. Finally, results based on artificial intelligence can be difficult to review as the process by which the results are made may be unknown or obscured. This obscurity can create hurdles for identifying errors in the results, as well as improving the models providing the results.

Model 302 may take inputs 304 and provide outputs 306. The inputs may include multiple datasets, such as a training dataset and a test dataset. Each of the plurality of datasets (e.g., inputs 304) may include data subsets related to user data, predicted forecasts and/or errors, and/or actual forecasts and/or errors. In some embodiments, outputs 306 may be fed back to model 302 as input to train model 302 (e.g., alone or in conjunction with user indications of the accuracy of outputs 306, labels associated with the inputs, or with other reference feedback information). For example, the system may receive a first labeled feature input, wherein the first labeled feature input is labeled with a known prediction for the first labeled feature input. The system may then train the first machine learning model to classify the first labeled feature input with the known prediction (e.g., a prediction).

In a variety of embodiments, model 302 may update its configurations (e.g., weights, biases, or other parameters) based on the assessment of its prediction (e.g., outputs 306) and reference feedback information (e.g., user indication of accuracy, reference labels, or other information). In a variety of embodiments, where model 302 is a neural network, connection weights may be adjusted to reconcile differences between the neural network's prediction and reference feedback. In a further use case, one or more neurons (or nodes) of the neural network may require that their respective errors are sent backward through the neural network to facilitate the update process (e.g., backpropagation of error). Updates to the connection weights may, for example, be reflective of the magnitude of error propagated backward after a forward pass has been completed. In this way, for example, the model 302 may be trained to generate better predictions.

In some embodiments, model 302 may include an artificial neural network. In such embodiments, model 302 may include an input layer and one or more hidden layers. Each neural unit of model 302 may be connected with many other neural units of model 302. Such connections can be enforcing or inhibitory in their effect on the activation state of connected neural units. In some embodiments, each individual neural unit may have a summation function that combines the values of all of its inputs. In some embodiments, each connection (or the neural unit itself) may have a threshold function such that the signal must surpass it before it propagates to other neural units. Model 302 may be self-learning and trained, rather than explicitly programmed, and can perform significantly better in certain areas of problem solving, as compared to traditional computer programs. During training, an output layer of model 302 may correspond to a classification of model 302, and an input known to correspond to that classification may be input into an input layer of model 302 during training. During testing, an input without a known classification may be input into the input layer, and a determined classification may be output.

In some embodiments, model 302 may include multiple layers (e.g., where a signal path traverses from front layers to back layers). In some embodiments, back propagation techniques may be utilized by model 302 where forward stimulation is used to reset weights on the "front" neural units. In some embodiments, stimulation and inhibition for model 302 may be more free-flowing, with connections interacting in a more chaotic and complex fashion. During testing, an output layer of model 302 may indicate whether or not a given input corresponds to a classification of model 302. In some embodiments, the model (e.g., model 302) may automatically perform actions based on outputs 306. In some embodiments, the model (e.g., model 302) may not perform any actions. The output of the model (e.g., model 302) may be used to determine a prediction.

In some embodiments, the system may generate predictions related to financial services. For example, the system may use one or more models and/or application to process a variety of data to generate predictions for tasks such as payment card eligibility determinations, fraud detection, and/or determining rates for auto-finance applications. For credit card eligibility, the model may use data such as the applicant's credit score, income, employment history, debt-to-income ratio, and past credit history. This data helps the model predict the likelihood of the applicant repaying the credit card debt. For fraud detection, models analyze transaction data, including the amount, location, frequency, and pattern of transactions. They compare these patterns to known fraudulent behavior to identify potentially fraudulent activities. For determining auto-finance rates, models might use the applicant's credit score, loan amount, loan term, vehicle details, and market interest rates. The data used by these models comes from various sources, including credit bureaus, financial institutions, customer-provided information, transaction records, and public records. By analyzing these data points, models can make informed predictions and decisions that help financial institutions manage risk, provide appropriate services, and enhance customer satisfaction.

In some embodiments, the model may process received data through several stages. For example, the model may collect and aggregate data from various sources (e.g., a user account, industry data, third-party data sources, etc.). The system may ensure the data is cleaned and preprocessed to handle any missing and/or inconsistent information. This preprocessing may include normalizing numerical data, encoding categorical variables, and applying techniques to handle outliers. The model may then use feature engineering to identify and create relevant features that can improve its predictive power. For instance, the system may derive new variables from existing ones, such as calculating the debt-to-income ratio from debt and income data.

Once the data is prepared, the system feeds the data into the model, which could be an artificial intelligence algorithm such as logistic regression, decision trees, and/or neural networks. The model may be trained on historical data, learning patterns, and/or relationships between input features and the target outcomes. During this training process, the system may adjust the model parameters to minimize prediction errors. After training, the system may validate the model and test the model using separate data sets to ensure the model has a predetermined and/or threshold accuracy and generalizability.

In some embodiments, the system may use specialized predictions based on the task. Additionally or alternatively, the system may adjust the inputs and/or outputs based on the determinations and/or predictions required. For example, for credit card eligibility, the model may evaluate the applicant's likelihood of defaulting on payments. In fraud detection, the model may identify anomalies and patterns indicative of fraudulent behavior. In auto-finance rate determination, the model may predict the risk associated with lending to an individual and adjusts the interest rates accordingly. In some embodiments, the entire process may be iterative, with models continually updated and refined as new data becomes available, ensuring they remain effective in making accurate and reliable predictions.

To process a plurality of user embeddings with a classifier model, the system first inputs the embeddings into the classifier, which is trained to associate embeddings with specific prediction categories. The classifier analyzes each embedding using its learned decision boundaries to evaluate which category it aligns with most strongly. For a prediction pairing, the system identifies embeddings corresponding to the first prediction and separates them into a first subset by applying a confidence threshold for that category. Similarly, it evaluates the embeddings for their alignment with the second prediction in the pairing, creating a second subset. The resulting subsets represent the embeddings most strongly associated with the respective predictions in the pairing, enabling focused analysis and downstream tasks like explanation generation.

To train the classifier model to determine predictions or categories corresponding to embeddings, the system uses labeled training data comprising embeddings paired with their known prediction categories. This data is typically generated by processing a large dataset of user queries or inputs through a feature extraction model to create embeddings, with each embedding labeled according to its corresponding prediction (e.g., sentiment, topic, or intent). The labeled dataset provides the foundation for supervised learning, where the classifier learns to associate patterns in the embeddings with specific prediction labels.

The training process involves feeding the labeled embeddings into the classifier model during training iterations. The model uses techniques like backpropagation and gradient descent to adjust its parameters based on the loss function, which quantifies the difference between the predicted labels and the true labels. Over successive epochs, the classifier improves its ability to generalize and correctly categorize new embeddings. The system may use additional techniques such as data augmentation, regularization, or hyperparameter tuning to enhance performance and robustness. Once trained, the classifier is validated using a separate test dataset to ensure it accurately determines the prediction category for unseen embeddings, making it suitable for processing live user data and supporting tasks like prediction pairing and interpretability.

System 300 also includes API layer 350. API layer 350 may allow the system to generate summaries across different devices. In some embodiments, API layer 350 may be implemented on mobile device 322 or user terminal 324. Alternatively or additionally, API layer 350 may reside on one or more of cloud components 310. API layer 350 (which may be A REST or Web services API layer) may provide a decoupled interface to data and/or functionality of one or more applications. API layer 350 may provide a common, language-agnostic way of interacting with an application. Web services APIs offer a well-defined contract, called WSDL, that describes the services in terms of its operations and the data types used to exchange information. REST APIs do not typically have this contract; instead, they are documented with client libraries for most common languages, including Ruby, Java, PHP, and JavaScript. SOAP Web services have traditionally been adopted in the enterprise for publishing internal services, as well as for exchanging information with partners in B2B transactions.

API layer 350 may use various architectural arrangements. For example, system 300 may be partially based on API layer 350, such that there is strong adoption of SOAP and RESTful Web-services, using resources like Service Repository and Developer Portal, but with low governance, standardization, and separation of concerns. Alternatively, system 300 may be fully based on API layer 350, such that separation of concerns between layers like API layer 350, services, and applications are in place.

In some embodiments, the system architecture may use a microservice approach. Such systems may use two types of layers: Front-End Layer and Back-End Layer where microservices reside. In this kind of architecture, the role of the API layer 350 may provide integration between Front-End and Back-End. In such cases, API layer 350 may use RESTful APIs (exposition to front-end or even communication between microservices). API layer 350 may use AMQP (e.g., Kafka, RabbitMQ, etc.). API layer 350 may use incipient usage of new communications protocols such as gRPC, Thrift, etc.

In some embodiments, the system architecture may use an open API approach. In such cases, API layer 350 may use commercial or open-source API Platforms and their modules. API layer 350 may use a developer portal. API layer 350 may use strong security constraints applying WAF and DDoS protection, and API layer 350 may use RESTful APIs as standard for external integration.

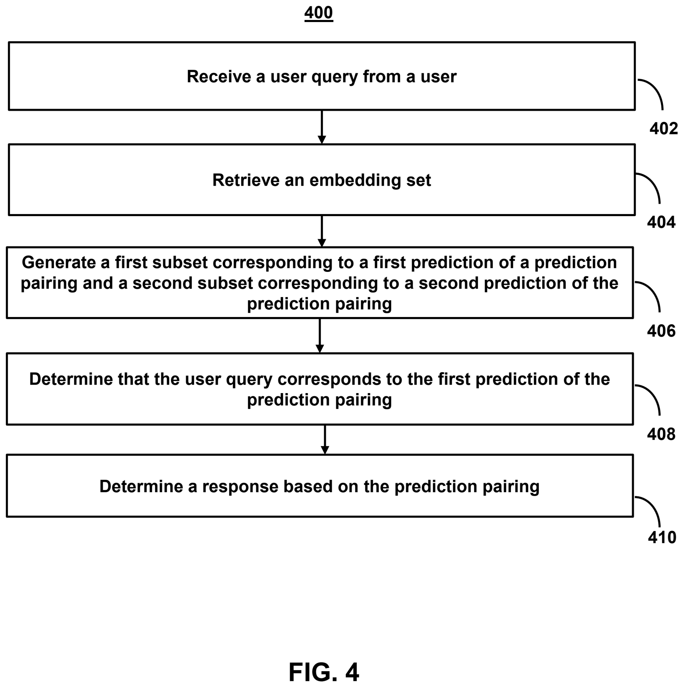

FIG. 4 shows a flowchart of the steps involved in generating plain text descriptions by translating predictions based on speech signal or data processing from similar users, in accordance with one or more embodiments. For example, the system may use process 400 (e.g., as implemented on one or more system components described above) in order to generate plain text descriptions by translating predictions based on speech signal or data processing from similar users using prediction pairings.

At step 402, process 400 (e.g., using one or more components described above) receives a user query from a user. For example, the system may receive a first user query from a first user. The system receives a first user query from a first user through an input interface designed to capture the query in the form intended by the user. This interface can vary depending on the context and application, such as a text input field for written queries, a microphone for voice commands, or an API endpoint for programmatic requests. Once the user submits their query-such as typing a question, speaking a command, or sending a structured request-the system processes the input to ensure it is in a format suitable for analysis. For example, a voice query may be converted to text using speech-to-text technology, while a structured query might be parsed to extract key parameters. The system may also collect additional contextual data alongside the query, such as metadata about the user's session, location, device type, or previous interactions. This data helps provide a richer understanding of the query and can enhance the system's ability to interpret the user's intent. Once received, the query is routed to appropriate processing components, such as a natural language processing (NLP) engine, which analyzes its content, structure, and intent. By receiving and preprocessing the query in this way, the system ensures that it can effectively interpret and respond to the user's request.

At step 404, process 400 (e.g., using one or more components described above) retrieves an embedding set. For example, the system may retrieve a first embedding set, wherein the first embedding set comprises a plurality of user embeddings, wherein each user embedding of the plurality of user embeddings, correspond to respective user query of a plurality of user queries. For example, the system retrieves a first embedding set, comprising a plurality of user embeddings where each embedding corresponds to a respective user query, by accessing a storage mechanism where embeddings are organized and indexed. These embeddings are generated during the preprocessing or initial processing of user queries, where each query is transformed into a high-dimensional vector representation that captures its semantic and contextual information. The embeddings are typically stored in association with metadata, such as the original user query, timestamps, user identifiers, or query categories. When the system needs to retrieve the first embedding set, it initiates a query to the storage mechanism, specifying criteria that define the scope of retrieval. These criteria might include all embeddings generated within a certain time frame, embeddings related to specific users, or those associated with a particular type of query. The storage system-such as a database, a key-value store, or an embedding index-locates the embeddings that meet these criteria and retrieves them as a set. The system ensures that the retrieved embeddings remain associated with their respective user queries by maintaining links between the embeddings and their metadata. This association enables further analysis, such as categorizing the embeddings, comparing them with other sets, or using them for tasks like prediction pairing or explanation generation. By organizing and retrieving the first embedding set in this structured way, the system ensures that it can efficiently process and analyze the embeddings to support its operational goals.

**In** some embodiments, the system may retrieve the first embedding set may by receiving a first user query from a first user and determining the prediction pairing based on the first user query. For example, the system may retrieve the first embedding set by first receiving a user query from a first user and determining the prediction pairing relevant to that query. The process begins with the system analyzing the first user query, which could be in text, audio, or another format. The query is preprocessed and transformed into a high-dimensional embedding that captures its semantic and contextual features. This embedding is then analyzed using a trained classifier model or embedding space analysis to determine the most appropriate prediction pairing. The prediction pairing typically consists of two predictions that provide a meaningful framework for understanding the query, such as opposite sentiments, complementary intents, or contrasting topics. Once the prediction pairing is identified, the system uses it as a filter or criterion to retrieve the first embedding set. This set comprises a plurality of embeddings from previously processed user queries that correspond to the predictions in the pairing. The system queries a database or storage mechanism, specifying the embeddings associated with the predictions in the pairing. By retrieving these embeddings, the system ensures that it has a relevant dataset for further analysis, such as comparing the first user query's embedding with others in the set, generating textual descriptions, or refining its understanding of the query's intent. This approach integrates real-time query processing with a structured framework for managing embeddings and predictions, enabling accurate and interpretable responses.

In some embodiments, the system may determine the prediction pairing based on the first user query by determining a target prediction based on the first user query and determining that the target prediction corresponds to the first prediction. For example, the system determines the prediction pairing based on the first user query by first identifying a target prediction from the query and then associating it with the first prediction in a pairing. The process begins with the system analyzing the first user query, which is converted into a semantic embedding that captures its key features. This embedding is input into a trained classifier model, which evaluates the query against its learned prediction categories. The classifier assigns a confidence score to each possible prediction, reflecting how well the embedding aligns with each category. The system identifies the target prediction as the category with the highest confidence score or the one exceeding a predefined threshold, signifying the prediction most closely related to the query. Once the target prediction is determined, the system checks its association with predefined prediction pairings. If the target prediction matches the first prediction in one of these pairings, the system selects that pairing as relevant to the query. For instance, if the target prediction is "positive sentiment," and this corresponds to the first prediction in a pairing with "negative sentiment" as the second prediction, the system determines this pairing as applicable. By aligning the target prediction with a predefined pairing, the system not only identifies the prediction pairing but also sets the context for interpreting the query and generating responses. This method ensures that the pairing reflects a meaningful relationship relevant to the user query, enhancing the system's ability to provide accurate and interpretable outputs.

In some embodiments, the system may determine the prediction pairing based on the first user query by determining a target embedding of the first user query and determining that the target embedding corresponds to the first subset of user embeddings. For example, the system may system determines the prediction pairing based on the first user query by analyzing the query to generate a target embedding and then evaluating whether this embedding corresponds to the first subset of user embeddings. The process begins with the system receiving the first user query, which it processes to create a high-dimensional vector representation (the target embedding) that encapsulates the semantic and contextual features of the query. This embedding is then compared to a plurality of pre-existing user embeddings that have been categorized into subsets based on their alignment with specific predictions. The system uses similarity measures, such as cosine similarity or Euclidean distance, to evaluate the proximity of the target embedding to the embeddings in the first subset, which corresponds to the first prediction in a prediction pairing. If the target embedding is determined to closely match or fall within the threshold boundaries of the first subset, the system associates the query with the first prediction. Based on this association, the system identifies the corresponding prediction pairing, which includes the first prediction (aligned with the first subset) and its complementary or opposite prediction. By determining that the target embedding corresponds to the first subset, the system effectively links the user query to a structured framework of prediction pairings. This approach ensures that the pairing is relevant to the query's context and semantics, providing a foundation for further tasks like generating responses, explanations, or comparative analyses.

At step 406, process 400 (e.g., using one or more components described above) generates a first subset corresponding to a first prediction of a prediction pairing and a second subset corresponding to a second prediction of the prediction pairing. For example, the system may process the plurality of user embeddings with a first classifier model to generate a first subset of user embeddings corresponding to a first prediction of a prediction pairing and a second subset of user embeddings corresponding to a second prediction of the prediction pairing. The system processes a plurality of user embeddings with a first classifier model to generate a first subset of user embeddings corresponding to a first prediction of a prediction pairing and a second subset corresponding to a second prediction by leveraging the classifier's ability to categorize embeddings based on learned decision boundaries. The process begins with the system feeding the entire set of user embeddings into the classifier model, which has been trained to recognize patterns and features within embeddings that align with specific predictions. For each embedding, the classifier evaluates its similarity or alignment to each potential prediction using metrics such as probability scores, confidence levels, or feature matches.

The classifier assigns a likelihood or score for each embedding, indicating its fit with the first prediction and the second prediction in the pairing. Based on these scores, the system filters the embeddings to create subsets. Embeddings with scores meeting or exceeding a predefined threshold for the first prediction are grouped into the first subset, while those aligning with the second prediction are grouped into the second subset. This threshold ensures that only embeddings strongly indicative of a particular prediction are included, enhancing the precision of the subsets. The resulting subsets represent embeddings that are distinctly associated with the respective predictions in the pairing. These subsets are then used for further analysis, such as generating textual descriptions, refining predictions, or providing comparative insights. By processing the embeddings in this manner, the system ensures accurate categorization and alignment with the predictions, enabling focused and interpretable outcomes.

In some embodiments, the system may process the plurality of user embeddings with the first classifier model to generate the first subset of user embeddings by determining a first number of user embeddings in the first subset, determining a second number of user embedding in the second subset, and determining a ratio between the first number and the second number corresponds to a required threshold ratio. A system processes a plurality of user embeddings with the first classifier model to generate the first subset of user embeddings by applying a structured evaluation process that incorporates quantitative thresholds. The system begins by inputting the plurality of user embeddings into the first classifier model, which evaluates each embedding to determine its alignment with specific prediction categories, including the first and second predictions in a pairing. The classifier assigns a confidence score to each embedding for each prediction, and embeddings with scores above a predefined threshold for the first prediction are grouped into the first subset. Similarly, embeddings aligned with the second prediction form the second subset.

Once the subsets are generated, the system calculates the size of each subset by counting the number of embeddings in the first subset (the first number) and the second subset (the second number). These counts are used to compute a ratio between the sizes of the two subsets. The system then compares this ratio to a required threshold ratio, which serves as a criterion for validating the distribution of embeddings between the two subsets. If the ratio meets or exceeds the threshold, the system confirms the subsets as valid representations of the predictions in the pairing. If the ratio falls below the threshold, the system may adjust parameters, such as the confidence score thresholds, to refine the subsets. This approach ensures that the generated subsets are balanced and proportionally representative of the predictions in the pairing, supporting accurate and interpretable analyses. By incorporating the threshold ratio as a validation step, the system enhances the reliability of the subset generation process and ensures consistency in its classification and prediction tasks.

In some embodiments, the system may process the plurality of user embeddings with the first classifier model to generate the first subset of user embeddings by determining a first number of user embeddings in the first subset and determining that the first number corresponds to a required threshold number. For example, the system processes a plurality of user embeddings with the first classifier model to generate the first subset of user embeddings by evaluating the embeddings against a required threshold number for the subset. The process begins with the system inputting the plurality of user embeddings into the first classifier model, which assesses each embedding's alignment with specific prediction categories, including the first prediction in a prediction pairing. For each embedding, the classifier assigns a confidence score indicating how strongly it corresponds to the first prediction. Embeddings with scores exceeding a predefined threshold are grouped into the first subset.

After forming the first subset, the system determines its size by counting the number of embeddings included in the subset. This count, referred to as the first number, is then compared to a required threshold number, which represents the minimum or target size for the subset to be considered valid or representative. If the first number meets or exceeds the required threshold, the system confirms the subset as valid and proceeds with further processing or analysis. If the first number falls below the threshold, the system may adjust its classification parameters, such as lowering the confidence score threshold, to include additional embeddings and meet the required number. This method ensures that the first subset is both quantitatively sufficient and qualitatively aligned with the first prediction, enabling reliable and interpretable outcomes. By incorporating a required threshold number as a validation criterion, the system maintains consistency and rigor in its classification process, supporting accurate prediction and response generation.

In some embodiments, the system may process the plurality of user embeddings with the first classifier model to generate the first subset of user embeddings by determining a first cluster characteristic corresponding to the first prediction and determining that each user embedding in the first subset corresponds to the first cluster characteristic. For example, the system may process a plurality of user embeddings with the first classifier model to generate the first subset of user embeddings by identifying a first cluster characteristic that defines the embeddings corresponding to the first prediction and grouping embeddings that align with this characteristic. The process begins with the classifier model analyzing the embeddings, which are high-dimensional representations of user queries. The classifier evaluates each embedding's features against its learned patterns and decision boundaries for the first prediction, identifying a cluster characteristic that represents the shared attributes of embeddings aligning with that prediction. This characteristic might include specific feature values, spatial distributions in the embedding space, or semantic traits relevant to the prediction.

The system compares each embedding in the plurality against the first cluster characteristic, assessing its similarity or alignment using metrics such as distance from a cluster centroid, density within the characteristic's boundary, or other predefined rules. Embeddings that meet the criteria for alignment are grouped into the first subset. For example, in a sentiment analysis task, the first cluster characteristic might represent embeddings associated with "positive sentiment," such as those located near a centroid defined by embeddings from positive queries during training. By ensuring that each embedding in the first subset corresponds to the first cluster characteristic, the system generates a subset that is semantically coherent and tightly aligned with the first prediction. This approach enhances the interpretability and reliability of the classification process, as the embeddings in the subset consistently reflect the defined characteristic of the first prediction, supporting accurate downstream analysis and decision-making.

In some embodiments, the first embedding set is generated by a sequential foundation model, wherein the sequential foundation model is trained to map embeddings of user queries to corresponding descriptions comprising human-readable text. For example, the system generates a first embedding set using a sequential foundation model trained to map embeddings of user queries to corresponding descriptions in human-readable text by processing each query sequentially through the model. The process begins with the system receiving a set of user queries, which may be in various formats such as text, audio, or other structured data. Each query is preprocessed as needed, such as converting audio to text or tokenizing text input, to prepare it for input into the sequential foundation model. The model, designed with architectures like transformers, recurrent neural networks (RNNs), or long short-term memory (LSTM) networks, processes the queries in sequence, capturing the temporal or contextual relationships within each query.

During this process, the model generates embeddings-high-dimensional vector representations that encode the semantic and contextual features of the user queries. These embeddings are mapped to corresponding textual descriptions through the model's training, which involved learning relationships between embeddings and their human-readable interpretations. For instance, the model might have been trained on a dataset of queries paired with descriptive labels, such as "a user asking about weather conditions" or "a request for restaurant recommendations." The system collects these embeddings into the first embedding set, ensuring that each embedding is associated with its corresponding user query and description. This embedding set serves as a structured representation of the user queries, enabling further analysis, such as classification, clustering, or interpretability tasks. By leveraging the sequential foundation model's ability to bridge embeddings and human-readable text, the system ensures that the generated embedding set is both semantically rich and interpretable, facilitating efficient downstream processing.

At step 408, process 400 (e.g., using one or more components described above) determines that the user query corresponds to the first prediction of the prediction pairing. For example, the system may determine, using the first classifier model, that the first user query corresponds to the first prediction. The system determines, using the first classifier model, that the first user query corresponds to the first prediction by analyzing the query's embedding and evaluating its alignment with the prediction categories learned by the model. When the first user query is received, it is preprocessed and transformed into a high-dimensional vector representation (embedding) that captures its semantic and contextual features. This embedding is then input into the first classifier model, which has been trained on a labeled dataset of embeddings and their associated prediction categories. The classifier evaluates the embedding against its learned decision boundaries, which represent the relationships between different feature patterns and prediction categories. For each prediction, the classifier assigns a likelihood or confidence score based on how well the embedding matches the characteristics of that category. The system identifies the first prediction as corresponding to the user query if the score for that prediction exceeds a predefined threshold or is the highest among all categories, indicating that the embedding is most closely aligned with the first prediction. This decision-making process ensures that the classification is both data-driven and aligned with the model's understanding of the query's features. The result is a clear assignment of the user query to the first prediction, which can then be used for generating responses, explanations, or further analysis. This approach allows the system to handle diverse and complex queries while maintaining accuracy and interpretability in its predictions.

At step 410, process 400 (e.g., using one or more components described above) determines a response based on the prediction pairing. For example, the system may determine a first response to the first user query based on the prediction pairing. The system determines a first response to the first user query based on the prediction pairing by leveraging the relationships between the predictions in the pairing and aligning the response to the most relevant prediction. After receiving the first user query, the system processes it to generate an embedding that captures its semantic and contextual features. Using the classifier model, the system evaluates the embedding to determine which prediction in the pairing-such as the first or second prediction-is more closely aligned with the query. This evaluation is based on confidence scores or probabilities assigned to each prediction, which indicate the strength of alignment between the query and the predictions in the pairing. Once the system identifies the most relevant prediction (e.g., the first prediction), it uses the associated textual description or predefined rules linked to that prediction to generate a tailored response. For example, if the pairing involves "positive sentiment" and "negative sentiment," and the first prediction is identified as "positive sentiment," the system might formulate a response acknowledging the positive tone of the query and providing relevant suggestions or actions. The response is crafted to reflect the characteristics and intent underlying the query as inferred from the prediction. The system may also incorporate contextual information, such as user history, preferences, or metadata from the query, to further refine the response. By using the prediction pairing as a guiding framework, the system ensures that the response is both contextually appropriate and aligned with the user's intent, improving the overall accuracy and relevance of its interactions.

In some embodiments, the system may process the first subset to generate a first description, wherein the first description describes a first prediction corresponding to the first prediction in human-readable text, process the second subset to generate a second description, wherein the second description describes a second prediction corresponding to the second prediction in the human-readable text, and determine a third description, wherein the third description distinguishes the first description and the second description in the human-readable text.

The system processes the first and second subsets of user embeddings to generate descriptions for their corresponding predictions and a third description that distinguishes between them by leveraging the semantic and contextual information encoded in the embeddings. To generate the first description, the system analyzes the first subset, which contains embeddings aligned with the first prediction. It identifies common patterns, features, or semantic attributes shared across the embeddings in this subset. Using a mapping mechanism, such as a pretrained language model or a rules-based framework, the system translates these characteristics into a human-readable text description that succinctly captures the essence of the first prediction, such as "queries indicating positive sentiment" or "requests related to technical support."

Similarly, the system processes the second subset of embeddings to generate the second description. It applies the same analysis and mapping methodology to derive a human-readable text description that encapsulates the semantic features of the second prediction, such as "queries expressing negative sentiment" or "requests for billing assistance." This ensures that both descriptions are clear, contextually relevant, and aligned with the respective predictions.

To determine the third description, the system compares the first and second descriptions, identifying key differences or contrasting attributes between them. This comparative analysis may involve linguistic processing to highlight opposing terms, differing tones, or distinct themes. The third description is generated in human-readable text to explicitly distinguish the two predictions, emphasizing their unique characteristics or oppositional nature. For example, if the first description is "queries about positive experiences," and the second is "queries about negative experiences," the third description might state, "contrasting positive experiences with negative experiences." By providing all three descriptions, the system facilitates interpretability and enhances the user's understanding of the relationships between the predictions.

In some embodiments, the system determines a difference between the first description and second description and generates, on a user interface, the third description. For example, the system determines the difference between the first description and the second description by comparing their semantic, contextual, or linguistic features and then generates a third description to articulate this difference on a user interface. After generating the first and second descriptions from the subsets of user embeddings, the system analyzes their content using natural language processing (NLP) techniques. It identifies key distinctions in tone, terminology, or themes, such as contrasting keywords, oppositional sentiments, or divergent subject matter. For instance, if the first description highlights "positive user feedback" and the second describes "negative user feedback," the system detects the polarity difference between them. The system synthesizes this analysis into a concise and interpretable third description that captures the essence of the difference between the two descriptions. This third description is phrased in human-readable text, ensuring it is easily understandable to users. For example, it might state, "the first description highlights positive sentiment, whereas the second emphasizes negative sentiment," or "these categories represent queries about support requests versus billing inquiries." Once generated, the third description is rendered on a user interface in a clear and visually accessible format, such as a textual label, tooltip, or annotation accompanying the first and second descriptions. The UI design may also incorporate formatting, like color coding or visual separators, to further emphasize the distinctions outlined in the third description. This approach ensures that users can quickly grasp the differences between the predictions, enhancing interpretability and decision-making in the context of the system's outputs.

In some embodiments, the system may receive a first user query from a first user, generate for display, on a user interface, a first response, wherein the first response comprises the first prediction, receive a second user query comprising a rationale for the first prediction, and, in response to the second user query, generate for display, on the user interface, a second response, wherein the second response comprises the third description. For example, the system facilitates interactive user engagement by receiving queries, providing responses, and dynamically explaining predictions. When the system receives a first user query from a first user, it processes the query to generate a high-dimensional embedding that captures its semantic and contextual features. This embedding is analyzed using a trained classifier model to determine the most likely prediction from a predefined set of categories. Based on this analysis, the system generates a first response that includes the first prediction and presents it on a user interface in human-readable text. For example, the response might state, "the system predicts this query relates to positive sentiment."

After the user views the first response, they may submit a second query seeking a rationale for the first prediction, such as "Why does the system predict positive sentiment?" Upon receiving this second user query, the system retrieves the descriptions corresponding to the first prediction and any opposing or contrasting prediction in a prediction pairing. Using these descriptions, it generates a third description that highlights the differences between the predictions, explaining the reasoning behind the classification. For instance, the third description might state, "The prediction is based on identifying positive language patterns such as 'great experience,' in contrast to negative patterns like 'poor quality,' which are absent in this query." The system displays this second response, comprising the third description, on the user interface, providing users with a clear and interpretable explanation of the system's decision-making process. This interaction enhances transparency and user trust by allowing users to understand not only the prediction itself but also the rationale behind it.

**It** is contemplated that the steps or descriptions of FIG. 4 may be used with any other embodiment of this disclosure. In addition, the steps and descriptions described in relation to FIG. 4 may be done in alternative orders or in parallel to further the purposes of this disclosure. For example, each of these steps may be performed in any order, in parallel, or simultaneously to reduce lag or increase the speed of the system or method. Furthermore, it should be noted that any of the components, devices, or equipment discussed in relation to the figures above could be used to perform one or more of the steps in FIG. 4.

The above-described embodiments of the present disclosure are presented for purposes of illustration and not of limitation, and the present disclosure is limited only by the claims which follow. Furthermore, it should be noted that the features and limitations described in any one embodiment may be applied to any embodiment herein, and flowcharts or examples relating to one embodiment may be combined with any other embodiment in a suitable manner, done in different orders, or done in parallel. In addition, the systems and methods described herein may be performed in real time. It should also be noted that the systems and/or methods described above may be applied to, or used in accordance with, other systems and/or methods.

The present techniques will be better understood with reference to the following enumerated embodiments:
1. A method for generating plain text descriptions by translating predictions based on speech signal or data processing from similar users.
2. The method of the preceding embodiment, further comprising: receiving an audio query from a first user; retrieving a sequential foundation model, wherein the sequential foundation model is trained to map embeddings of audio queries to corresponding descriptions, and wherein the descriptions comprise human-readable text; generating a plurality of user embeddings based on a plurality of audio queries; retrieving a first embedding set, wherein the first embedding set comprises a plurality of user embeddings, wherein each user embedding of the plurality of user embeddings, correspond to respective user query of a plurality of user queries; determining a prediction pairing based on the audio query from the first user; processing the plurality of user embeddings with a first classifier model to generate a first subset of user embeddings corresponding to a first prediction of the prediction pairing; processing the plurality of user embeddings with the first classifier model to generate a second subset of user embeddings corresponding to a second prediction of the prediction pairing; processing the first subset of user embeddings to generate a first description, wherein the first description describes a first prediction corresponding to the first prediction the human-readable text; processing the second subset of user embeddings to generate a second description, wherein the second description describes a second prediction corresponding to the second prediction the human-readable text; and determining a third description distinguishing the first description and the second description.
3. The method of any one of the preceding embodiments, further comprising: receiving a first user query from a first user; retrieving a first embedding set, wherein the first embedding set comprises a plurality of user embeddings, wherein each user embedding of the plurality of user embeddings, correspond to respective user query of a plurality of user queries; processing the plurality of user embeddings with a first classifier model to generate a first subset of user embeddings corresponding to a first prediction of a prediction pairing and a second subset of user embeddings corresponding to a second prediction of the prediction pairing; determining, using the first classifier model, that the first user query corresponds to the first prediction; and determining a first response to the first user query based on the prediction pairing.
4. The method of any one of the preceding embodiments, wherein retrieving the first embedding set further comprises: receiving a first user query from a first user; and determining the prediction pairing based on the first user query.
5. The method of any one of the preceding embodiments, wherein determining the prediction pairing based on the first user query further comprises: determining a target prediction based on the first user query; and determining that the target prediction corresponds to the first prediction.
6. The method of any one of the preceding embodiments, wherein determining the prediction pairing based on the first user query further comprises: determining a target embedding of the first user query; and determining that the target embedding corresponds to the first subset of user embeddings.
7. The method of any one of the preceding embodiments, wherein processing the plurality of user embeddings with the first classifier model to generate the first subset of user embeddings further comprises: determining a first number of user embeddings in the first subset; determining a second number of user embedding in the second subset; and determining a ratio between the first number and the second number corresponds to a required threshold ratio.
8. The method of any one of the preceding embodiments, wherein processing the plurality of user embeddings with the first classifier model to generate the first subset of user embeddings further comprises: determining a first number of user embeddings in the first subset; and determining that the first number corresponds to a required threshold number.
9. The method of any one of the preceding embodiments, wherein processing the plurality of user embeddings with the first classifier model to generate the first subset of user embeddings further comprises: determining a first cluster characteristic corresponding to the first prediction; and determining that each user embedding in the first subset corresponds to the first cluster characteristic.
10. The method of any one of the preceding embodiments, wherein the first embedding set is generated by a sequential foundation model, wherein the sequential foundation model is trained to map embeddings of user queries to corresponding descriptions comprising human-readable text.
11. The method of any one of the preceding embodiments, wherein determining the third description further comprises: determining a difference between the first description and second description; and generating, on a user interface, the third description.
12. The method of any one of the preceding embodiments, further comprising: receiving a first user query from a first user; and generating for display, on a user interface, a first response, wherein the first response comprises the first prediction and the third description.
13. The method of any one of the preceding embodiments, further comprising: receiving a first user query from a first user; generating for display, on a user interface, a first response, wherein the first response comprises the first prediction; receiving a second user query comprising a rationale for the first prediction; and in response to the second user query, generating for display, on the user interface, a second response, wherein the second response comprises the third description.
14. The method of any one of the preceding embodiments, further comprising: receiving a first user query from a first user; determining, using the first classifier model, that the first user query corresponds to the first prediction; and determining to process the plurality of user embeddings with the first classifier model to generate the first subset of user embeddings corresponding to the first prediction.
15. The method of any one of the preceding embodiments, further comprising: determining a first prediction characteristic corresponding to the first prediction; determining a second prediction characteristic corresponding to the second prediction; determining a difference between the first prediction characteristic and the second prediction characteristic; and determining that the first prediction and the second prediction correspond to prediction pairing based on the difference.
16. The method of any one of the preceding embodiments, further comprising: determining a first category corresponding to the first prediction; determining a second category corresponding to the second prediction; and determining that the first prediction and the second prediction correspond to prediction pairing based on comparing the first category and the second category.
17. The method of any one of the preceding embodiments, wherein processing the first subset of user embeddings to generate the first description further comprises: determining a category for the first subset; and determining that the first description corresponds to the category.
18. One or more non-transitory, computer-readable mediums storing instructions that, when executed by a data processing apparatus, cause the data processing apparatus to perform operations comprising those of any of embodiments 1-17.
19. A system comprising one or more processors; and memory storing instructions that, when executed by the processors, cause the processors to effectuate operations comprising those of any of embodiments 1-17.
20. A system comprising means for performing any of embodiments 1-17.

## Claims

1. A system for generating plain text descriptions by translating predictions based on speech signal or data processing from similar users using prediction pairings, the system comprising:
one or more processors; and
one or more non-transitory, computer-readable mediums having instructions recorded thereon that when executed by the one or more processors cause operations comprising:
receiving an audio query from a first user;
retrieving a sequential foundation model, wherein the sequential foundation model is trained to map embeddings of audio queries to corresponding descriptions, and wherein the descriptions comprise human-readable text;
generating a plurality of user embeddings based on a plurality of audio queries;
retrieving a first embedding set, wherein the first embedding set comprises a plurality of user embeddings, wherein each user embedding of the plurality of user embeddings, correspond to respective user query of a plurality of user queries;
determining a prediction pairing based on the audio query from the first user;
processing the plurality of user embeddings with a first classifier model to generate a first subset of user embeddings corresponding to a first prediction of the prediction pairing;
processing the plurality of user embeddings with the first classifier model to generate a second subset of user embeddings corresponding to a second prediction of the prediction pairing;
processing the first subset of user embeddings to generate a first description, wherein the first description describes a first prediction corresponding to the first prediction the human-readable text;
processing the second subset of user embeddings to generate a second description, wherein the second description describes a second prediction corresponding to the second prediction the human-readable text; and
determining a third description distinguishing the first description and the second description.

2. A method for generating plain text descriptions by translating predictions based on speech signal or data processing from similar users, the method comprising:
retrieving a first embedding set, wherein the first embedding set comprises a plurality of user embeddings, wherein each user embedding of the plurality of user embeddings, correspond to respective user query of a plurality of user queries;
processing the plurality of user embeddings with a first classifier model to generate a first subset of user embeddings corresponding to a first prediction of a prediction pairing;
processing the plurality of user embeddings with the first classifier model to generate a second subset of user embeddings corresponding to a second prediction of the prediction pairing;
processing the first subset of user embeddings to generate a first description, wherein the first description describes a first prediction corresponding to the first prediction a human-readable text;
processing the second subset of user embeddings to generate a second description, wherein the second description describes a second prediction corresponding to the second prediction the human-readable text; and
determining a third description, wherein the third description distinguishes the first description and the second description in the human-readable text.

3. The method of claim 2, wherein retrieving the first embedding set further comprises:
receiving a first user query from a first user; and
determining the prediction pairing based on the first user query.

4. The method of claim 3, wherein determining the prediction pairing based on the first user query further comprises one or both of:
(a) determining a target prediction based on the first user query; and determining that the target prediction corresponds to the first prediction; and
(b) determining a target embedding of the first user query; and determining that the target embedding corresponds to the first subset of user embeddings.

5. The method of claim 3 or 4, wherein processing the plurality of user embeddings with the first classifier model to generate the first subset of user embeddings further comprises one or both of:
(a) determining a first number of user embeddings in the first subset; determining a second number of user embedding in the second subset; and determining a ratio between the first number and the second number corresponds to a required threshold ratio; and
(b) determining a first number of user embeddings in the first subset; and determining that the first number corresponds to a required threshold number.

6. The method of any one of claims 2 to 5, wherein processing the plurality of user embeddings with the first classifier model to generate the first subset of user embeddings further comprises:
determining a first cluster characteristic corresponding to the first prediction; and
determining that each user embedding in the first subset corresponds to the first cluster characteristic.

7. The method of any one of claims 2 to 6, wherein the first embedding set is generated by a sequential foundation model, wherein the sequential foundation model is trained to map embeddings of user queries to corresponding descriptions comprising human-readable text.

8. The method of any one of claims 2 to 7, wherein determining the third description further comprises:
determining a difference between the first description and second description; and
generating, on a user interface, the third description.

9. The method of any one of claims 2 to 8, further comprising:
receiving a first user query from a first user; and
one or more of:
(a) generating for display, on a user interface, a first response, wherein the first response comprises the first prediction and the third description;
(b) generating for display, on a user interface, a first response, wherein the first response comprises the first prediction; receiving a second user query comprising a rationale for the first prediction; and in response to the second user query, generating for display, on the user interface, a second response, wherein the second response comprises the third description; and
(c) determining, using the first classifier model, that the first user query corresponds to the first prediction; and determining to process the plurality of user embeddings with the first classifier model to generate the first subset of user embeddings corresponding to the first prediction.

10. The method of any one of claims 2 to 9, further comprising:
determining a first prediction characteristic corresponding to the first prediction;
determining a second prediction characteristic corresponding to the second prediction;
determining a difference between the first prediction characteristic and the second prediction characteristic; and
determining that the first prediction and the second prediction correspond to prediction pairing based on the difference.

11. The method of any one of claims 2 to 10, further comprising:
determining a first category corresponding to the first prediction;
determining a second category corresponding to the second prediction; and
determining that the first prediction and the second prediction correspond to prediction pairing based on comparing the first category and the second category.

12. The method of any one of claims 2 to 11, wherein processing the first subset of user embeddings to generate the first description further comprises:
determining a category for the first subset; and
determining that the first description corresponds to the category.

13. One or more non-transitory, computer-readable mediums having instructions recorded thereon that when executed by one or more processors cause operations comprising:
receiving a first user query from a first user;
retrieving a first embedding set, wherein the first embedding set comprises a plurality of user embeddings, wherein each user embedding of the plurality of user embeddings, correspond to respective user query of a plurality of user queries;
processing the plurality of user embeddings with a first classifier model to generate a first subset of user embeddings corresponding to a first prediction of a prediction pairing and a second subset of user embeddings corresponding to a second prediction of the prediction pairing;
determining, using the first classifier model, that the first user query corresponds to the first prediction; and
determining a first response to the first user query based on the prediction pairing.

14. The one or more non-transitory, computer-readable mediums of claim 13, wherein determining the first response to the first user query based on comparing the prediction pairing further comprises:
processing the first subset to generate a first description, wherein the first description describes a first prediction corresponding to the first prediction in human-readable text;
processing the second subset to generate a second description, wherein the second description describes a second prediction corresponding to the second prediction in the human-readable text; and
determining a third description, wherein the third description distinguishes the first description and the second description in the human-readable text.

15. The one or more non-transitory, computer-readable mediums of claim 13 or 14, wherein determining that the first user query corresponds to the first prediction further comprises:
determining a target prediction based on the first user query; and
determining that the target prediction corresponds to the first prediction;
wherein, optionally, determining the prediction pairing based on the first user query further comprises: determining a target embedding of the first user query; and determining that the target embedding corresponds to the first subset.
